Europäisches Patentamt

European Patent Office

Office européen des brevets

(19)

(11) **EP 0 829 745 B1**

(12) **FASCICULE DE BREVET EUROPEEN**

(45) Date de publication et mention
de la délivrance du brevet:
**23.03.2005 Bulletin 2005/12**

(51) Int Cl.$^7$: **G02F 1/133**, H01S 3/23

(21) Numéro de dépôt: **97402140.4**

(22) Date de dépôt: **16.09.1997**

(54) **Système de contrôle de faisceau lumineux**

Lichtstrahl-Steuerungssystem

Lightbeam control system

(84) Etats contractants désignés:
**DE FR GB**

(30) Priorité: **17.09.1996 FR 9611304**

(43) Date de publication de la demande:
**18.03.1998 Bulletin 1998/12**

(73) Titulaire: **Thales**
**75008 Paris (FR)**

(72) Inventeurs:
 • **Chanteloup, Jean-Christophe**
 **94117 Arcueil Cedex (FR)**
 • **Huignard, Jean-Pierre**
 **94117 Arcueil Cedex (FR)**
 • **Loiseaux, Brigitte**
 **94117 Arcueil Cedex (FR)**
 • **Tournois, Pierre**
 **94117 Arcueil Cedex (FR)**

(56) Documents cités:
 DE-A- 4 212 779    DE-U- 8 905 405
 JP-A- 6 289 337    US-A- 4 518 854

 • F.L.VLADIMIROV ET AL: "CONVERSION OF
 OPTICAL SIGNALS IN A LASER WITH AN
 INTRACAVITY LIQUID-CRYSTAL SPATIAL
 MODULATOR" QUANTUM ELECTRONICS, vol.
 15, no. 10, octobre 1985, NEW YORK US, pages
 1363-1367, XP002028227
 • C.B.DANE ET AL: "DESIGN AND OPERATION OF
 A 150W NEAR DIFFRACTION-LIMITED LASER
 AMPLIFIER WITH SBS WAVE FRONT
 CORRECTION" IEEE JOURNAL OF QUANTUM
 ELECTRONICS, vol. 31, no. 1, janvier 1995, NEW
 YORK US, pages 148 148-163, XP000487615

1          **EP 0 829 745 B1**          2

**Description**

L'invention concerne un système de contrôle de faisceau lumineux et notamment un système de correction de la forme du front d'onde d'un faisceau laser.

La qualité des faisceaux lasers est perturbée par des effets de lentille thermique qui proviennent du pompage inhomogène des barreaux lasers par des lampes flash ou par des diodes. Il est important de maintenir une qualité du faisceau aussi proche que possible de la limite de diffraction, en particulier, quelle que soit la cadence et la puissance moyenne délivrée par la source. L'objet de l'invention est de proposer une architecture de source continue ou impulsionnelle susceptible de délivrer une onde de très bonne qualité à partir d'une cellule à cristal liquide jouant le rôle d'un modulateur de phase bidimensionnel.

Des dispositifs de contrôle et de mesure de la forme du front d'onde d'un faisceau lumineux selon le préambule de la revendication 1 est décrit dans le document JP06289337.

L'invention concerne donc un système de contrôle de faisceau lumineux comportant :

- un séparateur de faisceau placé sur le trajet du faisceau à contrôler et dérivant de ce faisceau un faisceau de mesure ;
- un dispositif de détection recevant le faisceau de mesure et mesurant la forme du front d'onde du faisceau de mesure ;
- un dispositif de correction de forme de front d'onde placé sur le trajet du faisceau à contrôler, commandé par le dispositif de détection et corrigeant la forme du front d'onde du faisceau à contrôler ;

    caractérisé en ce que le dispositif de détection comporte :

- un modulateur spatial de lumière transmettant sélectivement des portions du faisceau de mesure ;
- un dispositif de focalisation recevant les différentes portions du faisceau de mesure ;
- une série de photodétecteurs placés selon le plan de focalisation du dispositif de focalisation ;
- un dispositif d'identification du ou des photodétecteurs détectant une onde lumineuse et calculant la forme du front d'onde en fonction des photodétecteurs identifiés.

Les différents objets et caractéristiques de l'invention apparaîtront à la lecture de la description qui va suivre et des figures annexées qui représentent :

- la figure 1, une architecture laser selon l'invention ;
- la figure 2, un dispositif de détection de forme de front d'onde ;
- la figure 3, un dispositif de correction de forme de front d'onde ;
- les figures 4 et 5, des variantes de réalisation du dispositif de l'invention.

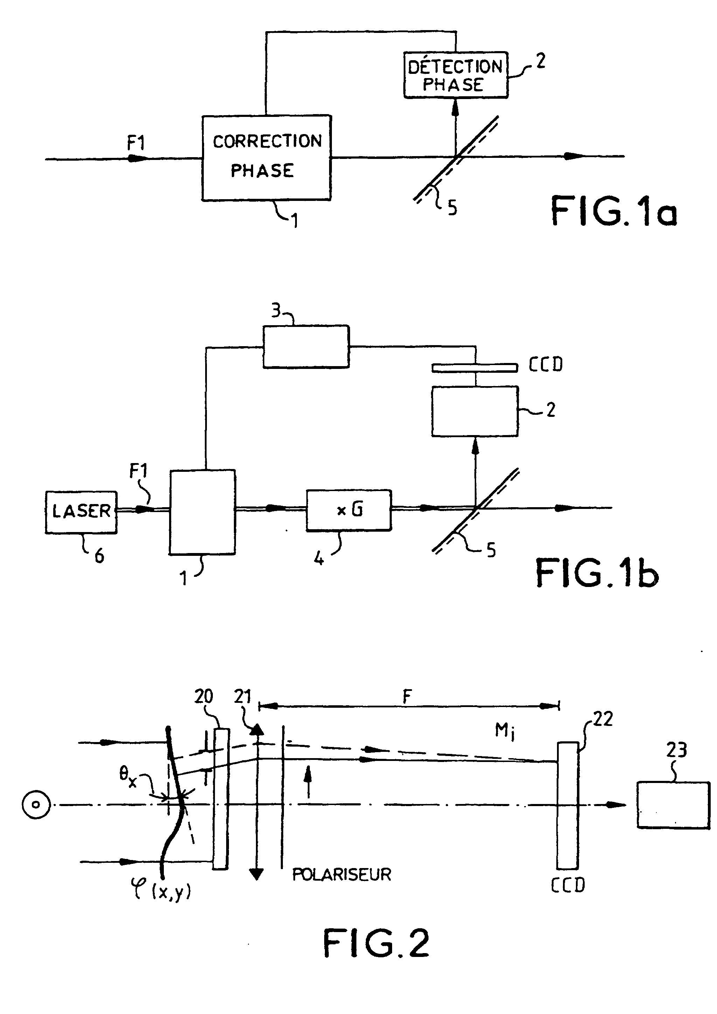

La figure 1a représente de façon générale le système de l'invention. Il s'agit de contrôler la forme du front d'onde d'un faisceau lumineux F1 et plus précisément de corriger ses distorsions de phases.

Un séparateur de faisceau 5 est placé sur le trajet du faisceau lumineux F1 et prélève une faible partie de ce faisceau pour la transmettre à un dispositif de détection 2. Ce dispositif de détection analyse la forme du front d'onde et notamment analyse les déphasages du front d'onde.

Un dispositif de correction de front d'onde 1 est placé sur le trajet du faisceau lumineux F1 en amont du séparateur de faisceau 5. Ce dispositif de correction est commandé par le dispositif de détection 2. Il permet d'induire spatialement des déphasages en fonction des différentes phases relatives des différents points du front d'onde détecté et de corriger donc la forme du front d'onde.

Selon l'invention, un tel dispositif est intégré dans une source laser (figure 1b) comprenant un oscillateur de basse énergie 6 et un ou plusieurs amplificateurs à fort gain 4. Le dispositif de correction de faisceau 5 est compris entre l'oscillateur 6 et l'amplificateur 4. Le séparateur de faisceau est situé en sortie de l'amplificateur.

Un tel dispositif permet ainsi de corriger les distorsions de phases d'un faisceau lumineux et de fournir une onde plane corrigée.

Le dispositif de correction de front d'onde 1 est préférentiellement un modulateur spatial 2D dans lequel une tension appliquée à chaque élément image génère un déphasage. A partir de la phase d'onde, à l'aide du dispositif de détection, on peut donc appliquer aux différents éléments images du modulateur spatial 1 des tensions générant des déphasages. Dans ces conditions, l'onde incidente étant prédistordue par le modulateur spatial 1, on obtient un faisceau corrigé en phases. L'onde incidente est une onde faible énergie et on obtient après passage dans l'amplificateur un faisceau intense dont la qualité n'est pas affectée par l'aberration de phase et notamment par l'aberration due à l'amplificateur.

En d'autres termes, le système proposé est l'équivalent d'une lame de phase électrooptique générant en transmission l'onde conjuguée de l'onde aberrante issue de l'amplificateur.

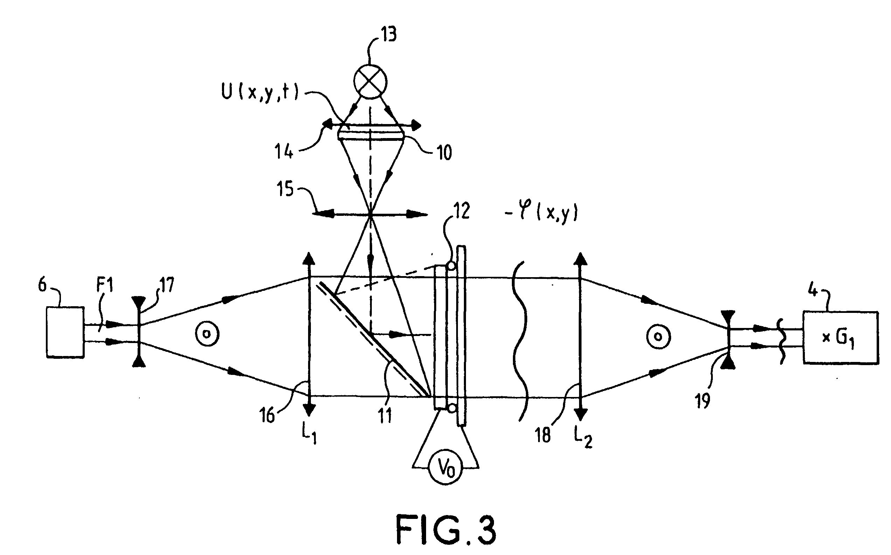

La mise en oeuvre de ce système est obtenue à l'aide des moyens des figures 2 et 3.

**Mesure de la phase de l'onde aberrante :**

La mesure de phase est réalisée par un écran à cristal liquide de N x N pixels dont la fonction est celle d'un réseau d'obturateurs électrooptiques.

Pour chaque ouverture sélectionnée sur le modulateur, on détecte une onde plane élémentaire qui se focalise en un point $M_i$. Les coordonnées de ce point sur la caméra CCD déterminent les pentes $\theta_x$ et $\theta_y$ du front d'onde autour de chaque pixel du réseau d'obturateurs. Ainsi, en balayant séquentiellement la matrice de N x N pixels on obtient après calcul la loi de phase $-\varphi_i$ (x, y) à générer sur le modulateur spatial placé avant l'amplificateur.

**Modulateur spatial de phase pour la génération de l'onde conjuguée avant amplification :**

L'invention met en oeuvre, pour réaliser cette fonction, une structure de modulation spatiale dont le schéma est indiqué sur la figure 3. Elle utilise deux modulateurs à cristal liquide :

-    une matrice active 10 à commande matricielle du type écran à cristal liquide de télévision de petite dimension ;
-    une valve à cristal liquide 12 adressée par photoconducteur destinée à moduler la phase du faisceau laser avec la loi $-\varphi_i$ (x, y).

Selon la figure 3, la matrice active 10 est projetée sur le photoconducteur par l'intermédiaire d'un objectif et d'une source incohérente compacte (lampe halogène, diodes électroluminescente ...) émettant dans le domaine de sensibilité spectrale du photoconducteur. L'obtention d'une loi de phase $-\varphi_i$ (x, y) sur le faisceau laser résulte de l'opération suivante :

-    génération sur la matrice active d'une répartition spatiale d'intensité $l_i$ (x, y) projetée sur le photoconducteur ;
-    génération de la loi de phase $-\varphi_i$ (x, y) par l'intermédiaire de la valve à adressage optique 12. La phase est modulée par la répartition de tension U (x, y) qui est induite par éclairement local $l_i$ (x, y) du photoconducteur.

Le bon fonctionnement de cette structure de modulation spatiale 2D nécessite de réaliser un étalonnage précis de la fonction de temps du dispositif à savoir à déphasage induit en fonction de la tension d'adressage de chaque pixel de la matrice active. Par ailleurs, il est très important de défocaliser légèrement l'image de la matrice active projetée sur la valve afin de réaliser un lissage de la loi d'éclairement sur le photoconducteur : dans ces conditions, le front d'onde laser n'est pas perturbée par l'image de la structure "pixelisée" de la matrice active. Le photoconducteur est choisi pour être photoactivé à la seule longueur d'onde d'éclairage de la matrice active. Il est transparent pour la longueur d'onde du faisceau à corriger (F1).

**Exemple de réalisation :**

-    La source lumineuse peut être une source laser Nd-YAG fonctionnant à un régime ns, du type MOPA ;
-    La mesure de phase se fait sur $10^2$ x $10^2$ points ;

-    •    choix d'un modulateur spatial à cristal liquide ferroélectrique à adressage matriciel = temps de commutation du pixel : 10 µs ; dimension du pixel : 200 x 200 $\mu m^2$ (caméra CCD format standard) ;

-    Le dispositif de correction de la phase comporte une valve photoconducteur-cristal liquide nématique à alignement parallèle adaptée à la modulation de phase.
     Exemple : BS0 - cristal liquide ou CdSe - cristal liquide
         Inscription $\lambda$ = 450 - 550 nm - lecture $\lambda$ > 800 nm
     Tension appliquée : U = 20 Volts - 50 Hz
     Déphasage induit

$$\left( \Delta\varphi = 2\pi \frac{d\Delta n}{\lambda} \right)$$

$\Delta\varphi \simeq 8\pi$ avec d = 20 µm, $\Delta n$ = 0,2 et $\lambda$ = 1,06 µm

Le photoconducteur peut être éclairé par une source incohérente mettant par exemple dans le bleu ou le vert à l'aide d'une source halogène, une lampe à arc, une diode électroluminescente, etc.

-    La matrice active 10 est du type matrice active à cristal liquide de format standard télévision éclairée et projetée sur la valve à photoconducteur 12. Cette matrice à cristal liquide a par exemple 620 x 480 éléments images de dimensions 50 µm;
-    Les circuits 3 sont des moyens de calcul de la phase $\varphi$ (x, y) à partir de la mesure de la position du maximum d'intensité de chaque point du plan de détecteurs du dispositif de détection 2 ;
-    Il est également prévu des moyens d'adaptation du faisceau laser à la dimension et à la géométrie de la valve photoconducteur cristal liquide. Sur la figure 3, ces moyens sont représentés par les lentilles 14 et 15. De plus, en sortie de la valve 12, des lentilles 18 et 19 adaptent la section du faisceau à la dimension de l'amplificateur 4.

**Avantages présentés par le dispositif:**

- L'architecture de source proposée met en oeuvre des composants cristaux liquides dont la technologie est bien maîtrisée par les applications visualisation ;
- Les mêmes types de composant et de technologie sont adaptés aux sources lasers continues, impulsionnelles visibles ou IR. On a donc une très grande diversité d'utilisation pour des modules de contrôle de phase et pour la mesure du front d'onde ;
- Le front d'onde n'est pas affecté par des effets de "pixelisation" ;
- La structure à double adressage n'est pas "pixelisée" (l'électrode de la valve photoconducteur-cristal liquide est uniforme) et de ce fait elle n'introduit pas d'effets de diffraction parasites dus aux structures classiques à commande matricielle ;
- La phase peut être contrôlée sur un grande nombre de points typiquement 32 x 32 ---> $10^2$ x $10^2$ excursion de phase 0 --> $2\pi$ (ou éventuellement $4\pi$ ou $6\pi$) suivant l'épaisseur et la direction du cristal liquide) ;
- La tenue au flux d'une structure homogène du type valve pour le correcteur de front d'onde est supérieure à celle des écrans "pixelisés" ;
- L'ensemble des composants fonctionne à la cadence vidéo et met en oeuvre des technologies issues de la visualisation ;
- La structure d'analyse du front d'onde aberrant est particulièrement bien adaptée à une architecture laser contrairement aux techniques classiques de HARTEMANN développées pour l'optique adaptative, celle-ci ne nécessite pas de réseaux de microlentilles et utilise une caméra CCD standard de résolution TV ;
- L'ensemble du système de contrôle du faisceau est adapté à la fois à des sources continues ou impulsionnelles visibles ou IR. Les cristaux liquides sont des matériaux électrooptiques transparents du visible à l'IR éventuellement jusqu'à 10 μm. Dans ce cas, la valve optique 1 et la cellule d'analyse du front d'onde 2 seront réalisées sur des substrats transparents à l'infrarouge. On notera que les matériaux adaptés à la génération d'une onde conjuguées par interaction non linéaire ne possèdent pas un domaine d'application aussi varié : les cellules Brillouins, fonctionnent en régime ns, les cristaux photoréfractifs peuvent être adaptés au domaine visible pour source continue.

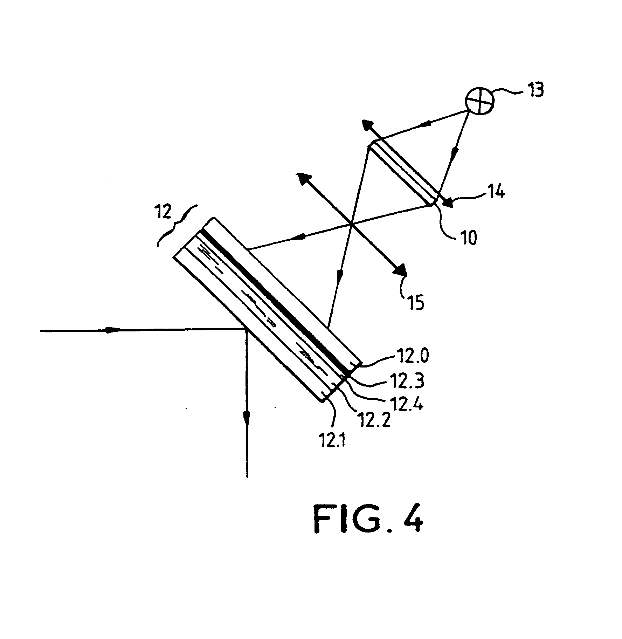

La figure 4 représente un mode de réalisation dans lequel le dispositif de correction de phase fonctionne en réflexion au lieu de fonctionner en transmission. Il comporte un écran à cristal liquide incliné par rapport à la direction du faisceau à corriger. Cet écran comporte deux lames transparentes 12.0 et 12.1 entre lesquelles se trouve le cristal liquide 12.2. La lame porte une couche d'un matériau photoconducteur 12.3 qui est recouverte d'une couche en matériau diélectrique réfléchissant 12.4 (miroir diélectrique). L'écran à cristal liquide reçoit par l'arrière, sur la couche de matériau photoconducteur, le faisceau de commande permettant de changer localement la conductivité du matériau photoconducteur et d'induire des modulations de phases dans le faisceau à corriger.

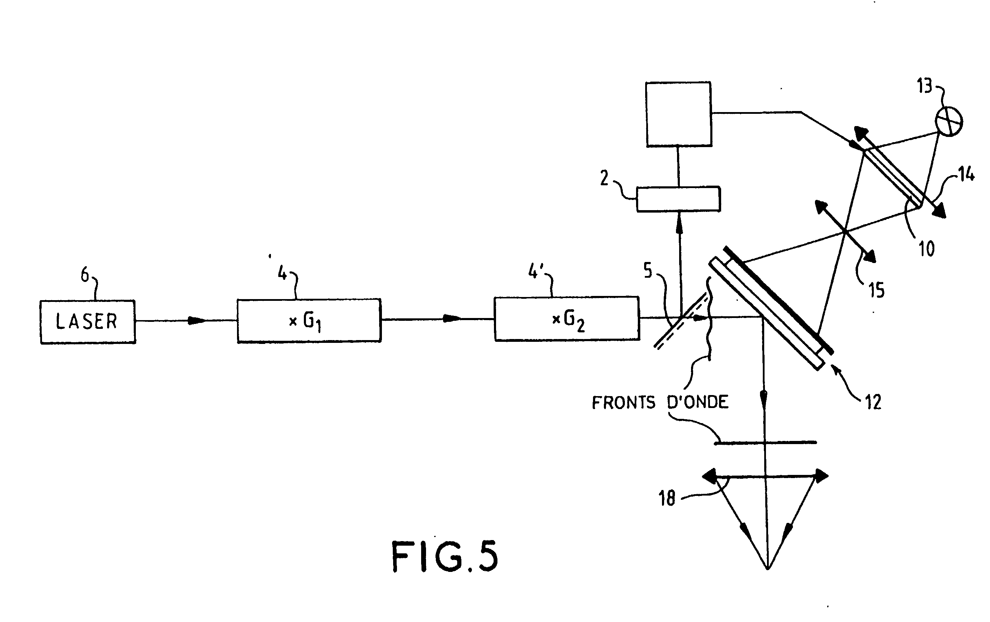

La figure 5 représente une variante de réalisation dans laquelle la correction de phase se fait après amplification du faisceau laser. Après amplification par le ou les amplificateurs 4, 4', le faisceau lumineux peut comporter des distorsions. Le séparateur 5 prélève une faible partie du faisceau qui est analysée par le dispositif de détection de front d'onde lequel commande le dispositif de correction de front d'onde. A titre d'exemple, sur la figure 5, le dispositif de correction de front d'onde fonctionne en réflexion et fournit un front d'onde corrigé en phase.

**Revendications**

1. Système de contrôle de faisceau lumineux comportant :

   - un séparateur de faisceau (5) placé sur le trajet du faisceau à contrôler et dérivant de ce faisceau un faisceau de mesure ;
   - un dispositif de détection (2) recevant le faisceau de mesure et mesurant la forme du front d'onde du faisceau de mesure ;
   - un dispositif de correction de forme de front d'onde (1) placé sur le trajet du faisceau à contrôler, commandé par le dispositif de détection et corrigeant la forme du front d'onde du faisceau à contrôler;

   le dispositif de détection (2) comportant :

   - un modulateur spatial de lumière (20) ;

   - un dispositif de focalisation (21) recevant les différentes portions du faisceau de mesure ;

   - une série de photodétecteurs (22) ;

   - un dispositif d'identification (23) du ou des photodétecteurs détectant une onde lumineuse et calculant la forme du front d'onde en fonction des photodétecteurs identifiés

   **caractérisé en ce que** la série de photodétecteurs est placée selon le plan de focalisation du dispositif de focalisation et **en ce que** le modulateur spatial de lumière est capable de transmettre sélectivement des portions du faisceau de mesure et d'obturer les autres.

2. Système selon la revendication 1, **caractérisé en ce que** le dispositif de correction de forme de front d'onde (1) est placé sur le trajet du faisceau à contrôler en amont du séparateur de faisceau (5).

3. Système selon la revendication 1, **caractérisé en ce que** le dispositif de correction de forme de front d'onde (1) est placé sur le trajet du faisceau à contrôler en aval du séparateur de faisceau (5).

4. Système selon la revendication 1, **caractérisé en ce que** le dispositif de détection (2) permet la mesure de la phase du faisceau de mesure en divers points de la section droite du faisceau de mesure et **en ce que** le dispositif de correction de forme de front d'onde permet de (1) corriger, la phase du front d'onde en différents points du faisceau à contrôler.

5. Système selon la revendication 1, **caractérisé en ce qu'**il comporte un oscillateur (6) émettant une onde optique vers un amplificateur optique (4), le dispositif de correction de forme de front d'onde étant placé entre l'oscillateur (6) et l'amplificateur optique (4), le séparateur de faisceau (5) étant placé à la sortie de l'amplificateur optique (4).

6. Système selon la revendication 1, **caractérisé en ce que** la série de photodétecteurs est une matrice de CCD.

7. Système selon la revendication 1, **caractérisé en ce que** le modulateur spatial de lumière est un modulateur à cristal liquide à commande matricielle dont chaque élément image est commandable pour soit obturer le passage de la lumière soit la transmettre.

8. Système selon la revendication 1, **caractérisé en ce que** le dispositif de correction de forme de front d'onde comporte :

   - un premier modulateur spatial de lumière à commande matricielle (10) commandé par le dispositif de détection (2) et ;
   - un deuxième modulateur spatial de lumière (12) comportant une couche de matériau photoconducteur et placé sur le trajet du faisceau à contrôler (F1) ;
   - une source lumineuse (13) éclairant le premier modulateur spatial de lumière à commande matricielle lequel transmet un faisceau modulé à la couche de matériau photoconducteur du deuxième modulateur spatial de lumière.

9. Système selon la revendication 8, **caractérisé en ce qu'**il comporte :

   - un premier dispositif optique (14, 15) pour adapter la section du faisceau d'éclairement du premier modulateur spatial de lumière à la surface du deuxième modulateur ;
   - un deuxième dispositif optique (16, 17) pour adapter la section du faisceau à contrôler (F1) à la surface du deuxième modulateur spatial de lumière ;
   - un troisième dispositif optique (18, 19) pour adapter la section du faisceau transmis par le deuxième modulateur spatial de lumière à la surface d'entrée d'un dispositif d'amplification (4).

10. Système selon la revendication 9, **caractérisé en ce que** le premier modulateur spatial de lumière est imagé sur le deuxième modulateur spatial de lumière en prévoyant une défocalisation de l'imagerie.

11. Système selon la revendication 8, **caractérisé en ce que** le deuxième modulateur spatial de lumière (12) fonctionne en réflexion par rapport au faisceau à contrôler, la couche de matériau photoconducteur (12.3) recevant le faisceau modulé par l'arrière du modulateur spatial vis-à-vis de la direction d'incidence du faisceau à contrôler.

**Patentansprüche**

1. Lichtstrahl-Steuerungssystem mit Folgendem:

   - einem Strahlteiler (5), der auf dem Verlauf des zu steuernden Strahls platziert ist und von diesem Strahl einen Messstrahl ablenkt;

   - eine Erfassungsvorrichtung (2), die diesen Messstrahl empfängt und die Form der Wellenfront des Messstrahls misst;

   - eine Korrekturvorrichtung der Wellenfrontform (1), die auf dem Verlauf des zu steuernden Strahls platziert ist, die von der Erfassungsvorrichtung gesteuert wird und die Form der Wellenfront des zu steuernden Strahls korrigiert;

   wobei die Erfassungsvorrichtung (2) Folgendes umfasst:

   - einen räumlichen Lichtmodulator (20);

   - eine Fokussierungsvorrichtung (21), die die verschiedenen Teile des Messstrahls empfängt;

   - eine Reihe von Photosensoren (22);

- eine Identifikationsvorrichtung (23) des oder der Photosensoren, die eine Lichtwelle erfasst und die Form der Wellenfront in Abhängigkeit von den identifizierten Photosensoren berechnet,

**dadurch gekennzeichnet, dass** die Reihe von Photosensoren gemäß dem Fokussierungsplan der Fokussierungsvorrichtung platziert ist, und dadurch, dass der räumliche Lichtmodulator selektiv Teile des Messstrahls senden und die anderen verschließen kann.

2. System nach Anspruch 1, **dadurch gekennzeichnet, dass** die Korrekturvorrichtung der Wellenfrontform (1) auf dem Verlauf des zu steuernden Strahls vom Strahlteiler (5) stromaufwärts platziert ist.

3. System nach Anspruch 1, **dadurch gekennzeichnet, dass** die Korrekturvorrichtung der Wellenfrontform (1) auf dem Verlauf des zu steuernden Strahls stromabwärts des Strahlteilers (5) platziert ist.

4. System nach Anspruch 1, **dadurch gekennzeichnet, dass** die Erfassungsvorrichtung (2) das Messen der Phase des Messstrahls in verschiedenen Punkten des geraden Querschnitts des Messstrahls erlaubt, und dadurch, dass die Korrekturvorrichtung der Wellenfrontform (1) es erlaubt, die Phase der Wellenfront in verschiedenen Punkten des zu steuernden Strahls zu korrigieren.

5. System nach Anspruch 1, **dadurch gekennzeichnet, dass** es einen Oszillator (6) umfasst, der eine optische Welle zu einem optischen Verstärker (4) sendet, wobei die Korrekturvorrichtung der Wellenfrontform (1) zwischen dem Oszillator (6) und dem optischen Verstärker (4) platziert ist, wobei der Strahlteiler (5) am Ausgang des optischen Verstärkers (4) platziert ist.

6. System nach Anspruch 1, **dadurch gekennzeichnet, dass** die Reihe von Photosensoren eine CCD-Matrix ist.

7. System nach Anspruch 1, **dadurch gekennzeichnet, dass** der räumliche Lichtmodulator ein Flüssigkristallmodulator mit Matrixsteuerung ist, von dem jedes Bildelement steuerbar ist, um entweder den Durchgang des Lichts zu verschließen oder es zu übertragen.

8. System nach Anspruch 1, **dadurch gekennzeichnet, dass** die Korrekturvorrichtung der Wellenfrontform Folgendes umfasst:

- einen ersten räumlichen Lichtmodulator mit Matrixsteuerung (10), der von der Erfassungsvorrichtung (2) gesteuert wird und;

- einen zweiten räumlichen Lichtmodulator (12), der eine Schicht photoleitenden Werkstoffs umfasst und auf dem Verlauf des zu steuernden Strahls (F1) platziert ist;

- eine Lichtquelle (13), die den ersten räumlichen Lichtmodulator mit Matrixsteuerung beleuchtet, der einen modulierten Strahl an die Schicht photoleitenden Werkstoffs des zweiten räumlichen Lichtmodulators überträgt.

9. System nach Anspruch 8, **dadurch gekennzeichnet, dass** es Folgendes umfasst:

- eine erste optische Vorrichtung (14, 15), um den Querschnitt des Beleuchtungsstrahls des ersten räumlichen Lichtmodulators an die Oberfläche des zweiten Modulators anzupassen;

- eine zweite optische Vorrichtung (16, 17), um den Querschnitt des zu steuernden Strahls (F1) an die Oberfläche des zweiten räumlichen Lichtmodulators anzupassen;

- eine dritte optische Vorrichtung (18, 19), um den Querschnitt des vom zweiten räumlichen Lichtmodulator übertragenen Strahls an die Eingangsoberfläche einer Verstärkungsvorrichtung (4) anzupassen.

10. System nach Anspruch 9, **dadurch gekennzeichnet, dass** der erste räumliche Lichtmodulator auf dem zweiten räumlichen Lichtmodulator abgebildet ist, wobei eine Defokussierung der Abbildungstechnik vorgesehen ist.

11. System nach Anspruch 8, **dadurch gekennzeichnet, dass** der zweite räumliche Lichtmodulator (12) in Reflexion zu dem zu steuernden Lichtstrahl funktioniert, wobei die Schicht photoleitenden Werkstoffs (12.3) den modulierten Strahl über die Rückseite des räumlichen Modulators gegenüber der Einfallsrichtung des zu steuernden Strahls empfängt.

**Claims**

1. Light beam control system comprising:

- a beam splitter (5) placed in the path of the beam to be controlled and taking off from this beam a measurement beam;
- a detection device (2) that receives the measurement beam and measures the shape of the wavefront of the measurement beam;
- a wavefront shape correction device (1) placed in the path of the beam to be controlled, operated by the detection device and correcting the shape of the wavefront of the beam to be controlled;

the detection device (2) comprising:

- a spatial light modulator (20);
- a focusing device (21) that receives the various portions of the measurement beam;
- a series of photodetectors (22);
- a device (23) for identifying the photodetector or photodetectors, which detects a light wave and calculates the shape of the wavefront according to the photodetectors identified,

   **characterized in that** the series of photodetectors is placed in the focal plane of the focusing device and **in that** the spatial light modulator is capable of selectively transmitting some portions of the measurement beam and blocking off the others.

2. System according to Claim 1, **characterized in that** the wavefront shape correction device (1) is placed in the path of the beam to be controlled upstream of the beam splitter (5).

3. System according to Claim 1, **characterized in that** the wavefront shape correction device (1) is placed in the path of the beam to be controlled downstream of the beam splitter (5).

4. System according to Claim 1, **characterized in that** the detection device (2) is used to measure the phase of the measurement beam at various points over the cross section of the measurement beam and **in that** the wavefront shape correction device (1) is used to correct the phase of the wavefront at various points over the beam to be controlled.

5. System according to Claim 1, **characterized in that** it includes an oscillator (6) that emits an optical wave towards an optical amplifier (4), the wavefront shape correction device being placed between the oscillator (6) and the optical amplifier (4), the beam splitter (5) being placed at the exit of the optical amplifier (4).

6. System according to Claim 1, **characterized in that** the series of photodetectors is a CCD matrix.

7. System according to Claim 1, **characterized in that** the spatial light modulator is a matrix-controlled liquid-crystal modulator, each pixel of which can be controlled in order to block the passage of light or to transmit it.

8. System according to Claim 1, **characterized in that** the wavefront shape correction device comprises:

- a first matrix-controlled spatial light modulator (10) controlled by the detection device (2) and;
- a second spatial light modulator (12) comprising a layer of photoconductive material and placed in the path of the beam (F1) to be controlled;
- a light source (13) illuminating the first matrix-controlled spatial light modulator, which transmits a modulated beam to the layer of photoconductive material of the second spatial light modulator.

9. System according to Claim 8, **characterized in that** it comprises:

- a first optical device (14, 15) for adapting the cross section of the beam for illuminating the first spatial light modulator to the area of the second modulator;
- a second optical device (16, 17) for adapting the cross section of the beam (F1) to be controlled to the area of the second spatial light modulator; and
- a third optical device (18, 19) for adapting the cross section of the beam transmitted by the second spatial light modulator to the entry area of an amplification device (14).

10. System according to Claim 9, **characterized in that** the first spatial light modulator is imaged on the second spatial light modulator by defocusing the imaging.

11. System according to Claim 8, **characterized in that** the second spatial light modulator (12) operates in reflection relative to the beam to be controlled, the layer of photoconductive material (12.3) receiving the modulated beam via the rear of the spatial modulator with respect to the direction of incidence of the beam to be controlled.

DÉTECTION
PHASE — 2

F1 → CORRECTION
PHASE

5

**FIG.1a**

1

3

CCD

2

F1

LASER — × G

6 — 1 — 4 — 5

**FIG.1b**

20 21 F

M$_i$

22

23

θ$_x$

POLARISEUR

CCD

$\varphi$ (x,y)

**FIG.2**

FIG.3

EP 0 829 745 B1

FIG. 4

10

FIG.5